# EUROPÄISCHE PATENTSCHRIFT

(11) **EP 1 115 797 B1**
(45) Veröffentlichungstag und Bekanntmachung des Hinweises auf die Patenterteilung: **01.07.2009**
(21) Anmeldenummer: 99968242.0
(22) Anmeldetag: 27.08.1999
(51) Int. Cl.: C09D 4/06, C08F 290/14, C09D 4/00, C08F 222/10

(54) **PHOTOPOLYMERISIERBARE ACRYLLACKZUSAMMENSETZUNGEN**
PHOTOPOLYMERIZABLE ACRYLIC LACQUER COMPOSITIONS
COMPOSITIONS DE PEINTURE ACRYLIQUE PHOTOPOLYMERISABLES

(30) Priorität: 28.08.1998 FR 9810825
(43) Veröffentlichungstag der Anmeldung: 18.07.2001
(73) Patentinhaber: BASF Coatings AG, 48165 Münster (DE)
(72) Erfinder: ALLARD, M., Maxime, I-20040 Burago Di Molgora (IT); JAECQUES, M. Cyrille, 67590 Schweighouse s/Moser (FR)
(74) Vertreter: Leifert & Steffan
(86) Internationale Anmeldenummer: PCT/EP1999/006329
(87) Internationale Veröffentlichungsnummer: WO 2000/012635

(56) Entgegenhaltungen:
- EP-A- 0 256 765
- US-A- 5 587 403
- US-A- 5 629 365
- PATENT ABSTRACTS OF JAPAN vol. 16, no. 455, 22. September 1992 (1992-09-22) & JP 04 159353 A (KANEGAFUCHI CHEM. IND. CO. LTD.), 2. Juni 1992 (1992-06-02)
- PATENT ABSTRACTS OF JAPAN vol. 10, no. 194, 8. Juli 1986 (1986-07-08) & JP 61 036375 A (NIPPON TELEGR. & TELEPH. CORP. (NTT)), 21. Februar 1986 (1986-02-21)
- PATENT ABSTRACTS OF JAPAN vol. 95, no. 8, 29. September 1995 (1995-09-29) & JP 07 133338 A (SUMITOMO CHEM. CO. LTD.), 23. Mai 1995 (1995-05-23)
- PATENT ABSTRACTS OF JAPAN vol. 15, no. 266, 5. Juli 1991 (1991-07-05) & JP 03 087744 A (ASAHI CHEM. IND. CO. LTD.), 12. April 1991 (1991-04-12)
- PATENT ABSTRACTS OF JAPAN vol. 97, no. 2, 28. Februar 1997 (1997-02-28) & JP 08 283608 A (MITSUBISHI RAYON CO. LTD.), 29. Oktober 1996 (1996-10-29)
- PATENT ABSTRACTS OF JAPAN vol. 96, no. 2, 29. Februar 1996 (1996-02-29) & JP 07 258599 A (TONEN CORP.), 9. Oktober 1995 (1995-10-09)
- PATENT ABSTRACTS OF JAPAN vol. 017, no. 233, 12. Mai 1993 (1993-05-12) & JP 04 361037 A (ASAHI CHEM. IND. CO. LTD.), 14. Dezember 1992 (1992-12-14)

## Beschreibung

Die vorliegende Erfindung betrifft die Verwendung von photo-polymerisierbaren Acryllackzusammensetzungen.

Die Erfindung eignet sich insbesondere für Lacke zum Überziehen von Substraten aus Polycarbonat oder Polymethylmethacrylat (PMMA).

Zur Verbesserung der Witterungsbeständigkeit von Farben und Lacken kann man bekanntlich Gemische aus UV-Absorbem des Benzotriazoltyps und sogenannten HALS-Verbindungen (HALS = Hindered Amine Light Stabilisators), bei denen es sich um Lichtschutzmittel vom Typ sterisch gehinderter Amine handelt, verwenden.

Als Benzotriazol sei 2-(2'-Hydroxy-5'-methyl-phenyl)-benzotriazol mit der Formel 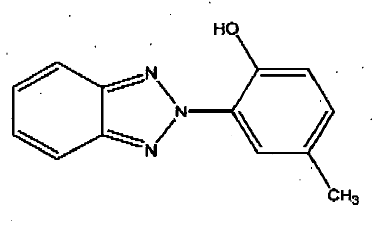 der CAS-Nummer 2440-22-4 und einem Molekulargewicht von 225 aufgeführt.

Als HALS-Verbindung verwendet man sehr häufig HALS-Verbindungen vom Typ 1, wie Bis-(2,2,6,6-tetra- methyl-4-piperidinyl)-sebacat mit der Formel 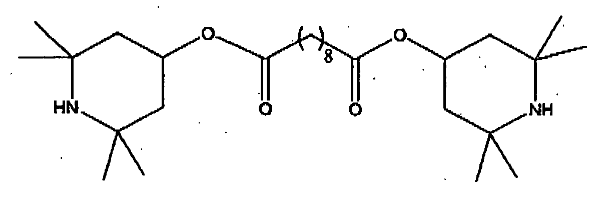 der CAS-Nummer 52829-07-9 und einem Molekulargewicht von 481, oder HALS-Verbindungen vom Typ 2, wie insbesondere Bis-(1,2,2,6,6-pentamethyl-4-piperidinyl)-sebacat mit der Formel 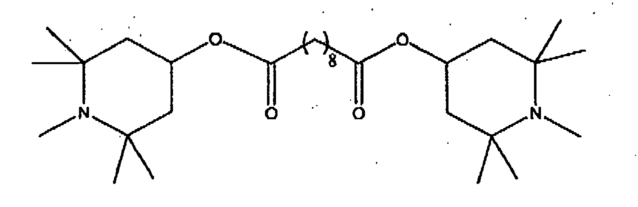 der CAS-Nummer 41556-26-7 und einem Molekulargewicht von 509.

Bekanntlich ist die Stabilisierung von photo-polymerisierbaren Acryllacken im allgemeinen problematischer. In der Acryllackformulierungstechnik ist nämlich gut bekannt, dass man in diese Lacke eine bestimmte Anzahl von Stabilisatoren einarbeiten muss, die die Farbvariationen und den Transparenzverlust der Lacke einschränken sollen. Bestimmte bekannte Stabilisatoren können jedoch die Haftungseigenschaften des Lacks auf dem Substrat beeinträchtigen.

So bringt der Einsatz von Benzotriazolderivaten eine Inhibierung der Polymerisation sowohl an der Oberfläche als auch im Kem der Produkte mit sich. Darüber hinaus führt die Basizität der HALS-Verbindungen vom Typ 1 zudem bei der Feuchtvbärmebeständigkeitsprüfung zu Ablöseerscheinungen.

Außerdem hängt die Wahl der Stabilisatoren auch zu einem großen Teil von der Härte des Acryllacks ab.

So unterscheidet man allgemeiner:
"Harte" Lacke mit einer Persoz-Härte gemäß NFT-Norm 30016 von mehr als 300 Sekunden, die als erste Lacke überhaupt eingesetzt wurden. Bei diesen Lacken kann es sich um Zweikomponentenlacke, die im allgemeinen thermisch gehärtet werden, oder um "UV-Lacke", die unter UV-Strahlung gehärtet werden, handeln. Diese Lacke werden im allgemeinen in einer dünnen Schicht, die im allgemeinen 5 bis 15 µm stark ist, aufgebracht.
"Elastische" oder "flexible" Lacke mit einer Persoz-Härte von weniger als 120 Sekunden, die wiederum in zwei Klassen unterteilt werden:
-Zweikomponentenlacke vom Typ vernetztes Polyurethan (PUR), die bei Temperaturen zwischen 120 und 130°C über einen Zeitraum von etwa 40 bis 60 Minuten thermisch gehärtet werden, und
-"UV"-Lacke, die unter ultravioletter Strahlung gehärtet werden.

Diese elastischen oder flexiblen Lacke gehören zur Klasse der "selbstheilenden" Lacke.

Im besonderen Fall der Aufbringung der Acryllack auf Polycarbonat-Substrate, insbesondere bei Lacken für Fahrzeugscheinwerfer, muss man bei der Formulierung der Lacke berücksichtigen, dass das Polycarbonat aufgrund seiner Struktur gegenüber Vergilbung bei Bewitterung sehr anfällig ist. Daher muss man der Lackzusammensetzung Produkte zusetzen, die den Lack selbst gegenüber Vergilbung und Schäden durch Rißbildung infolge einer Depolymerisation der Polymerketten stabilisieren. Der Zusatz von UVA- und UVB-Filtern zum Lack ist daher obligatorisch. Deren Konzentration in den Lacken ist jedoch dadurch beschränkt, dass die Absorber eine Eigenfarbe mitbringen und aufgrund ihrer Reaktionsträgheit als Weichmacher fungieren, was zu Ausblutungserscheinungen oder einer Verringerung der Chemikaiienbeständigkeit des Lacks führt. Beim Ausbluten geht außerdem Transparenz verloren. Bei gleicher Konzentration hängt der Schutz des Polycarbonats daher stark von der verbleibenden Dicke ab. Diese Beziehung gehorcht dem Lambert-Beerschen Gesetz. Das bedeutet mit anderen Worten, dass bei geringer Auftragsstärke die UV-Filter-Konzentration sehr schnell angehoben werden muss, was die anwendungstechnischen Eigenschaften des Lacks beeinträchtigt und ihn für eine UV-Polymerisation unbrauchbar macht.

In der US-Anmeldung 5,629,365 werden wässrige Latexpolymere zum Beschichten von Fenstern, Schildern, Fußbodenbelägen, Zelten, Markisen und Containern beschrieben. Diese wässrigen Latexverbindungen enthalten unter anderem auch sterisch gehinderte Phenole und dienen zum Schutz der jeweiligen Oberfläche vor UV-Bestrahlung.

Die US-Patentanmeldung 5,587,403 beschreibt Beschichtungen für Glasfasern. Dabei handelt es sich um feuchtigkeitsbeständige Beschichtungen, die unter anderem auch sterisch gehinderte Phenole enthalten.

In der internationale Patentanmeldung WO 96/23836 wurde bereits vorgeschlagen, für photopolymerisierbare elastische Lacke, die insbesondere zum Schutz von Scheiben aus synthetischem Kunststoffmaterial vorgesehen sind, Mischungen aus Triazinen und neutralen HALS-Verbindungen vom Typ 2 zu verwenden. Gerade diese UV-Absorber-Systeme eignen sich jedoch nicht für Lackformulierungen vom Urethanacrylattyp zur Herstellung von harten Lacken, insbesondere von Lacken mit einer Persoz-Härte von mehr als 300 Sekunden.

Es ist festzustellen, dass es beim Versuch der Verwendung der auf dem Gebiet der oben aufgeführten elastischen Lacke entwickelten UV-Absorber-Systeme für harte Lacke unmöglich ist, ohne Vorbehandlung des Substrats oder Verwendung einer die Haftung des Lacks auf dem Substrat fördernden Grundierung annehmbare Haftungsbedingungen zu erreichen.

Im Zuge eigener Untersuchungen hat sich jetzt herausgestellt, dass durch Ersatz der HALS-Verbindungen durch Antioxidantien aus der Klasse der sterisch gehinderten Phenole eine Verbesserung der optischen Eigenschaften erzielt werden kann, ohne dass dabei eine Verschlechterung der bei Gegenwart von HALS-Verbindungen im Fall von harten Lackzusammensetzungen beobachteten Haftungseigenschaften des Lacks auftritt.

Unter gehinderten Phenolen ist hier eine gut bekannte Klasse von Phenolderivaten, die allgemein als Antioxidantien Anwendung finden, zu verstehen.

Bei den verwendeten Derivaten vom Typ sterisch gehinderter Phenole handelt es sich um oligomerisierte, dimerisierte oder substituierte Derivate von Methyl-2,6-di-tert.-butyl-4-methylphenol. Die Substituenten werden im allgemeinen unter Alkylgruppen mit vorzugsweise 6 bis 18 Kohlenstöffatomen, Isocyanurat, Triazin, Thioalkyl, Amino oder Cycloamino ausgewählt.

Das 4-Methylphenol kann mit sich selbst oder mit Cyclopentadien-Derivaten sowie mit verschiedenen Substituenten, wie sie insbesondere in "Plastics Additives Handbook", R. Gätcher und H. Müller, Ausgabe 3/1990, Seite 40-50, definiert sind, dimerisiert oder oligomerisiert sein.

Diese Produkte sind im Handel als Schutzmittel für thermoplastische Polyolefine, Polyethylen niederer Dichte (LDPE), Polyethylen hoher Dichte (HDPE), Polypropylen, Poly-4-methylpenten und Polybutylen, gegen Oxidation und Abbau dieser Polymere erhältlich und dienen in erster Linie als Schutzmittel bei ihrer Verarbeitung und dann Stabilisator zur Vermeidung der Depolymerisation.

Wie oben bereits ausgeführt wurde, beruht die vorliegende Erfindung auf der überraschenden Entdeckung, dass diese besonderen Antioxidantien, die bisher noch nie in Acryllackformulierungen verwendet wurden, in Acryllackformulierungen und insbesondere in Formulierungen für harte Acryllack, insbesondere Acryllacke für den Schutz von Polycarbonat- oder PMMA-Oberflächen, eingesetzt werden können, ohne dass diese Formulierungen bei der photochemischen Polymerisation, insbesondere bei der Polymerisation unter UV-Strahlung destabilisiert oder die Lackhaftungseigenschaften bei der Feuchtwärmealterung dieses Lacks beeinträchtigt werden.

Somit betrifft die Erfindung die Verwendung von sterisch gehinderten Phenolen als Stabilisatoren für eine photopolymerisierbare Acryllack-Zusammensetzung.

Das sterisch gehinderte Phenol wird vorteilhafterweise unter Produkten mit einer Molmasse von mehr als 300 ausgewählt.

Als Beispiele für Produkte, die besonders gut für die Ausführung der Erfindung geeignet sind, seien die folgenden Produkte genannt, die nachstehend mit ihren Molmassen und ihrer Chemical-Abstracts-Nummer aufgeführt sind.
2,6-Di-tert.-butyl-4-nonylphenol, M=333, CAS=4306-88-1
2,2'-Methylenbis-(4-methyl-6-tert.-butyl-phenol), M=341, CAS=119-47-1
4,4'-Butylidenbis-(2-tert.-butyl-5-methyl-phenol), M=383, CAS=85-60-9
4,4'-Thiobis-(2-tert.-butyl-5-methylphenol), M=358, CAS=96-69-5
2,2'-Thiobis-(6-tert.-butyl-4-methylphenol), M=358, CAS=90-66-4
Octadecyl-3-(3',5'-di-t-butyl-4'-hydroxy-phenyl)-propionat, M=531, CAS=2082-79-3
Tetrakismethylen-(3,5-di-t-butyi-4-hydroxy-hydrocinnamat)-methan, M=1178, CAS= 6683-19-8
Tris-(3,5-di-t-butyl-4-hydroxybenzyl)-isocyanurat, M=784, CAS=27676-62-6
2,2'-Thiodiethylbis-(3,5-di-tert.-butyl-4-hydroxyphenyl)-propionat, M=642, CAS=41484-35-9
1,1,3-Tri-(2'-methyl-4'-hydroxy-5'-tert.-butylphenyl)-butan, M=545, CAS=1843-03-4
2,2'-Methylenbis-6-(1-methylcyclohexyl)-para-kresol, M=421, CAS=77-62-3
2,2'-Dimethyl-6-(1-methylcydohexyl)-pherlol, M=218, CAS=77-61-2
N,N'-Hexamethylenbis-(3,5-di-tert.-butyl-4-hydroxyhydrozimtsäureamid), M=637, CAS=23128-74-7
Triethylenglykolbis-(3-tert.-butyl-4-hydroxy-5-methylphenyl)-propionat, M=587, CAS=36443-68-2
sowie sterisch gehinderte polymere Phenole.

Ein Beispiel für derartige Produkte ist ein Polymer mit einem Molekulargewicht zwischen 700 und 800 mit der CAS-Nummer 68610-51-5, das unter dem Warenzeichen Lowinox® CPL von der Firma Great Lakes vertrieben wird.

Von diesen Produkten wählt man vorteilhafterweise das sterisch gehinderte Phenol der nachstehenden Formel (I):

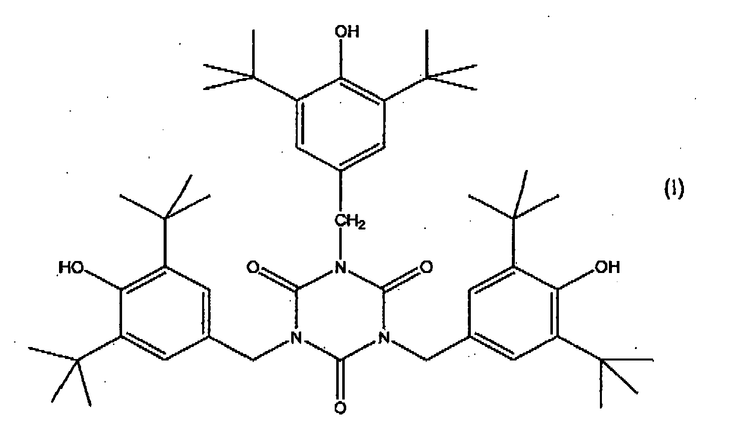

Dieses Produkt hat die CAS-Nummer 2 27 676-62-6 und besitzt eine Molmasse von 784. Es handelt sich um ein gehindertes Phenol, das auch als Mischung aus Isocyanurat und Triazinen mit Alkylphenolsubstituenten angesehen werden kann.

Die Zusammensetzungen enthalten das sterisch gehinderte Phenol vorteilhafterweise in einer Menge von 0,05 bis 0,4 Gew.-%, bezogen auf den Feststoffgehalt der Zusammensetzung.

Wie bereits oben gesehen, bezieht sich die Erfindung auf die Verwendung von sterisch gehinderten Phenolen als Stabilisatoren für eine photopolymerisierbare Acryllack-Zusammensetzung.

Derartige Lacke enthalten als ungesättigte Acrylderivate, die einen wesentlichen Bestandteil dieser Zusammensetzungen bilden, im allgemeinen unter den ungesättigten Acrylderivaten mit einer Urethan-, Polyester- oder Acrylatstruktur ausgewählte Acrylderivate. Diese Lacke sind vorteilhafterweise im wesentlichen aus den folgenden Bestandteilen aufgebaut:

### Polyolester wie:

Di-trimethylolpropantetra- oder -triacrylat, Trimethylolpropantriacrylat, Pentaerythrittetra- oder -triacrylat, Pentaerythritalkoxytetra- oder -triacrylat, Dipentaerythritpenta- oder -hexaacrylat, Acrylpolyesterpolyole allgemein.

### Polyurethanacrylate wie:

Derivate von mit aliphatischen Isocyanaten wie IPDI, HDI, HMDI modifizierten Polyolen mit Hydroxyethylacrylat- oder Hydroxybutylacrylat-Terminierung.

### Acrylacrylate wie:

Acrylpräpolymere, deren Hydroxylgruppen mit Acrylsäure verestert sind.

Sie enthalten außerdem auch noch die in Zusammensetzungen zur Herstellung von Acryflacken üblichen Additive.

Die Zusammensetzungen enthalten daher vorteilhafterweise grenzflächenaktive Additive wie Polysiloxanderivate, monofunktionelle Acrylmonomere zur Verbesserung der Lackhaftung, Haftvermittler, insbesondere in Form von carboxylierten Oligomeren oder Methacryloylphosphorsäurederivaten, und Photoinitiatoren zur Auslösung der Polymerisation unter einer UV-Lampe.

Die Zusammensetzungen enthalten neben dem sterisch gehinderten Phenol vorteilhafterweise außerdem auch noch andere Stabilisatoren.

Sie enthalten insbesondere außerdem mindestens einen UV-Absorber aus der Klasse der Triazine, vorzugsweise ein Triazin mit einer der folgenden Strukturen: 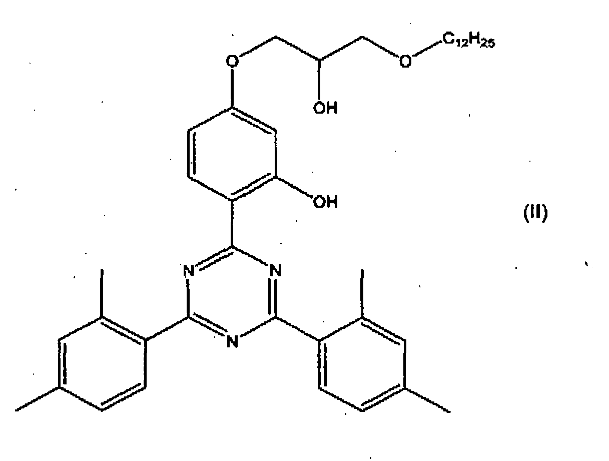 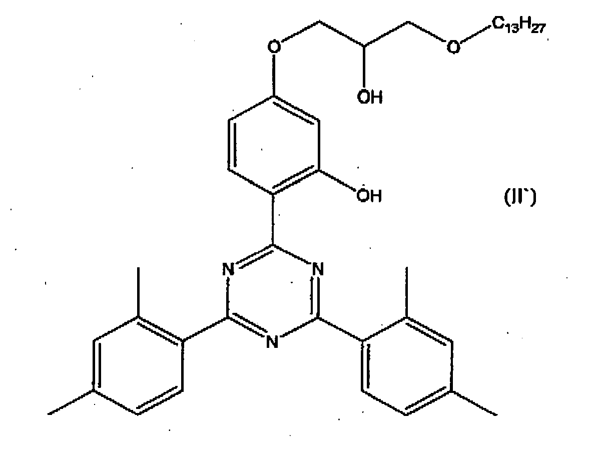 oder

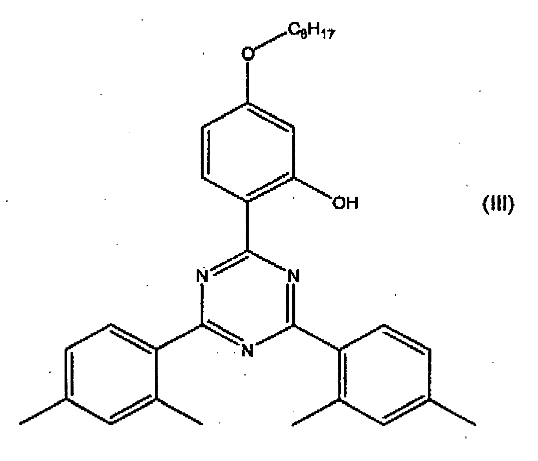

Ein Gemisch aus den Produkten der obigen Formeln (II) und (II') ist im Handel unter dem Warenzeichen Tinuvin® 400 erhältlich.

Das Produkt der Formel (III) ist unter dem Warenzeichen Cyagard® UV-1164L erhältlich, wobei es sich bei der C₁₈H₁₇-Gruppierung um ein Gemisch aus isomeren Isooctylgruppen handelt.

Die Lackzusammensetzungen enthalten darüber hinaus auch noch mindestens einen UV-Absorber aus der Klasse der Benzotriazole. Von diesen sei insbesondere 2-(2'-Hydroxy-5-methylphenyl)-benzotriazol mit einem Molekulargewicht von 225 und der CAS- Nummer 2440-22-4 genannt.

Als Beispiele für handelsübliche Produkte, die besonders gut als Benzotriazole für die Acryflackzusammensetzungen geeignet sind, seien die Handelsprodukte mit dem Warenzeichen Lowilite® 55 oder Tinuvin® P genannt.

Diese Benzotriazole sind in den Zusammensetzungen vorzugsweise in einer Konzentration zwischen 0,2 und 0,5 Gew.-%, bezogen auf den Feststoffgehalt der Zusammensetzung, enthalten.

Die Lackzusammensetzungen enthalten in besonders vorteilhafter Ausführung gleichzeitig ein sterisch gehindertes Phenol, mindestens ein Triazin und mindestens ein Benzotriazol in den oben angegebenen Anteilen.

Bei der Wahl der Anteile dieser verschiedenen Bestandteile wird berücksichtigt, dass das Triazin durch Unverträglichkeit mit der Polymermatrix nach Polymerisation und Feuchtwärmealterung Ausblutungen oder Schleierbildung hervorrufen kann und dass die Benzotriazolderivate allein die Polymerisationsreaktion inhibieren können, da sie bei Wellenlängen zwischen 360 und 390 Nanometer absorbieren. Daher verwendet man diese Triazolderivate vorteilhafterweise in geringeren Mengen und als Ergänzung zu einem Absorber vom Triazin-Typ.

Wie oben bereits ausgeführt wurde, stellt die Erfindung eine Möglichkeit zur Stabilisierung jeglicher Acryllacke, und zwar sowohl elastischer als auch harter Acryllacke bereit. Besonders vorteilhaft ist die Erfindung jedoch im Fall von Zusammensetzungen für harte Acryllacke, in denen die Gegenwart von sterisch gehindertem Phenol es ermöglicht, dem Nachteil abzuhelfen, dass HALS-Verbindungen zur Verbesserung der Transparenz in den Zusammensetzungen ohne Beeinträchtigung der Lackhaftungseigenschaften nicht verwendet werden können.

Die Erfindung betrifft daher die Verwendung eines sterisch gehinderten Phenols gemäß obiger Definition als Stabilisator für einen photopolymerisierbaren Acryllack zur Vermeidung des Verlusts der Haftung des Lacks auf einem Substrat.

Die Erfindung eignet sich ganz besonders gut für die Haftung von Acryllacken auf Polycarbonat- oder PMMA-Substraten. Wie aus den obigen Ausführungen bereits ersichtlich ist, eignet sie sich in besonders interessanter Weise für die Applikation eines harten Acryllacks, d. h. eines Acryllacks mit einer Persoz-Härte gemäß NFT-Norm 300 16 von mehr als 300 Sekunden.

Das folgende Beispiel soll die Erfindung näher erläutern, ohne sie zu beschränken.

### BEISPIELE

### a) Herstellung von Zusammensetzungen

Man stellt eine Acryllackzusamrtlensetzung A mit den folgenden Gewichtsanteilen in Prozent her:
- multifunktionelles Polyesterurethanacrylat (Ebecryl® 1290): 45%
- hydroxylierte PETA-tetraacrylat (Servocure® RTT 192): 39,8%
- Hydroxypropylmethacrylat: 10%
- Siloxanacrylat (Actilene® 800): 1,3%
- Siloxanpolyester (PA 57): 0,35%
- Benzoylameisensäuremethylester: 3,35%.

Dann stellt man aus dieser Zusammensetzung A verschiedene Mischungen 1 bis 6 mit den jeweils unten in Gewichtsprozent unter Bezug auf den Feststoffgehalt der Zusammensetzung aufgeführten Konzentrationen her.

### Mischung 1:

- 0,60% eines Triazingernischs (Tinuvin® 400), das im folgenden als T400 bezeichnet wird

### Mischung 2:

- 0,50% eines anderen Triazins (Cyagard® UV- 1164L), das im folgenden als C1164L bezeichnet wird

### Mischung 3:

- 0,50% C1164L,
- 0,25% eines Benzotriazols (Lowilite 55), das im folgenden als L55 bezeichnet wird
- 0,25% eines sterisch gehinderten Phenols, bei dem es sich um eine Mischung aus Isocyanurat und Triazinen mit Alkylphenolsubstituenten gemäß der obigen Formel (I) bzw. Tris-(3,5-di-t-butyl-4-hydroxybenzyl)-socyanurat (dieses Produkt ist im Handel unter der Handelsbezeichnung Anox® IC 14 oder Irganox® 3114 erhältlich) handelt

### Mischung 4:

- 0,5% Triazin C1164L
- 0,25% L55
- 0,25% Tris-p-nonylphenylphosphat (im Handel unter dem Warenzeichen Alkanax® TNPP erhältlich)

### Mischung 5:

- 0,60% T400,
- 0,25% einer HALS-Verbindung vom Typ 2 (Sanduvor® 3058)

### Mischung 6:

- 0,60% T400 und
- 0,25% einer polymeren HALS-Verbindung, die im Handel unter dem Warenzeichen Uvasil® 816 erhältlich ist.

### b) Herstellung von lackierten Polycarbonatscheiben

Diese verschiedenen Lackzusammensetzungen werden zur Beschichtung von Polycarbonatscheiben verwendet.

Man bringt die verschiedenen obigen Lackzusammensetzungen mit der Spritzpistole so auf, dass sich eine 10 +/- 2 µm dicke Schicht ergibt. Dann werden die Scheiben zum Abdampfen des Lösungsmittels 5 Minuten in einen 60°C warmen Ofen gelegt. Danach nimmt man unter einer UV-Lampe mit einer Energie von 3 J +/- 0,5 J/cm² die Polymerisation vor. Die Polymerisation erfolgt unter einer mit Bleiiodid dotierten Quecksilberdampflampe. Diese Lampe weist bei Wellenlängen von 365-385 und 400-410 Nanometer eine starke Emission auf.

### c) Prüfung der lackierten Scheiben

Dann unterwirft man die so lackierten Scheiben einerseits beschleunigten Alterungstests, die die Beurteilung der Variationen der Farben des Lacks ermöglichen, und andererseits Feuchtwärmealterungstests zur Beurteilung der Haftung des Lacks auf dem Substrat.

### 1) Beschleunigte Alterungstests

Diese Tests werden in einem Gerät Atlas Weatherometer Wom C1 3000 gemäß Iso-Norm 11341 durchgeführt.

Dabei bestimmt man die Variationen der Farbkoordinaten nach 1000 Stunden, genauer gesagt die Variationen der Lumineszenz (δL), der Grünfärbung (δa), der Gelbfärbung (δb) und der Gesamtfarbe (δE).

### 2) Haftungsprüfungen

Die Haftungsprufung erfolgt mit einem Hochdruckreiniger, der bei 85°C unter 85 bis 95 bar und bei einem pH-Wert von 8 bis 9 arbeitet. Die Düse wird in einem Abstand von 10 cm zur Prüflafel in Stellung gebracht.

Bei dieser Prüfung unterwirft man lackierte Scheiben aufeinanderfolgenden Warm-Kalt-Zyklen von jeweils:
- 16 h bei 85°C und 95% Feuchte,
- 3 h bei -20°C und
- 6 h bei 85°C bei Trockenhitze.

Die Haftung wird als gut erachtet, wenn nach Anwendung von 7 Warm-Kalt-Zyklen und Prüfung durch Abspülen mit dem Hochdruckreiniger keine Ablösung des Lacks auftritt.

Die Ergebnisse der Haftungsprüfungen und Alterungstests sind in der nachstehenden Tabelle aufgeführt. In der die Haftung betreffenden Spalte bedeutet das Zeichen "+", dass der Lack sich nach Anwendung von 7 Warm-Kalt-Zyklen nicht abgelöst hat. Dagegen wird durch eine Zahl die Zahl der Zyklen bis zum Auftreten von Ablösung angegeben.

**TABELLE**

| **Versuch** | **Haftung** **(Warm-Kalt-Zyklus)** | **Alterung** **(WOM, 1000 Stunden)** | | | |
|---|---|---|---|---|---|
| | | δL | δs | δb | δE |
| A | + | 1,9 | -0,9 | 2,7 | 3,4 |
| 1 | + | -0,3 | -0,4 | 1,1 | 1,2 |
| 2 | + | 0,9 | -0,2 | 0,1 | 0,9 |
| 3 | + | -0,5 | -0,1 | 0 | 0,5 |
| 4 | 4 | 0,2 | -0,4 | 0,7 | 0,8 |
| 5 | 3 | | | | |
| 6 | 3 | | | | |

Wie aus der Tabelle ersichtlich ist, weist das Produkt A anfänglich und auch nach den Feuchtwärmealterungszyklen eine gute Haftung auf. Nach 1000 Stunden Behandlung (im WOM) zeigen die mit dem Lack A behandelten Scheiben jedoch unannehmbare Verfärbungen, insbesondere starke Farbvariation, Vergilbung und Transparenzverlust.

Der Zusatz der UV-Absorber vom Triazintyp ergibt beim Feuchtwärmezyklus keinerlei Ablösung und ermöglicht insbesondere eine Verminderung der Vergilbung.

Der ergänzende Zusatz eines Benzotriazolderivats ermöglicht die Verbesserung der Beständigkeit des Lacks und die praktisch vollständige Unterdrückung der Vergilbung ohne Beeinträchtigung der Haftung, wobei aber immer noch eine Bleichung des Lacks auftritt und das System an Transparenz verliert, gefolgt von Rißbildung.

Der Zusatz von HALS-Verbindungen ergibt selbst bei Dosen von nur 0,25% einen Verlust der Haftung bei den Feuchtwärmezyklen. Der Ersatz dieser HALS-Verbindungen durch ein Derivat vom Typ sterisch gehinderter Phenole (Mischung 3), genauer gesagt in diesem Fall einer Mischung aus Isocyanurat und Triazinen mit Alkylphonolsubstituenten (Tris-(3,4-di-t-butyl-4-hydroxybenzylyl)-isocyanurat), ermöglicht die Erzielung von hervorragenden Alterungsbedingungen, da die Farbvariationen sehr gering sind und die Haftung nach 7 Warm-Kalt-Zyklen erhalten bleibt.

## Patentansprüche

1. Verwendung von sterisch gehinderten Phenolen als Stabilisatoren für eine photopolyrnerlslerbare Acryllack-Zusammensetzung zur Vermeidung des Verlustes der Haftung des Lacks auf einem Substrat.

2. Verwendung der Acryllack-Zusammensetzung nach Anspruch 1, **dadurch gekennzeichnet, dass** das sterisch gehinderte Phenol eine Molmasse von mehr als 300 aufweist.

3. Verwendung der Acryllack-Zusammensetzung nach Anspruch 1 oder 2, **dadurch gekennzeichnet, dass** das genannte sterisch gehinderte Phenol aus der Gruppe bestehend aus 2,6-Di-tert.-butyl-4-nonylphenol, M = 333; 2,2'-Methylenbls(4-methyl-6-tert.-butylphenol), M = 341; 4,4'-Butylldenbis(2-tert.-butyl-5-methylphenyl), M = 3483; 4-4'-Thlobis(2-tert.-butyl-6-methylphenol), M = 358; 2,2'-Thiobis(2-tert.-butyl-5-methylphenol), M = 358; Octadecyl-3-(3',5'-di-t-butyl-4'-hydroxyphenyl)propionat, M = 531, Tetrakis-methylen(3,5-di-t-butyl-4-hydroxyhydroclnnamat)methan, M = 1178; Trs(3,5-di-t-buty)-4-hydroxybenzyl)Isocyanurat, M = 784; 2,2'-Thiodiethylbls(3,5-di-tert.-butyl-4-hydroxyphenyl)propionat, M = 642; 1,1,3-Tri(2'-methyl-4'-hydroxy-5'-tert.-butylphenyl)butan, M = 545; 2,2'-Methylenbis-6-(1methylcydohexyl)-para-kresol, M = 4,21; 2,2'-Dimethyl-6-(1-methylcyclohexyl)phenol, M = 218; N,N'-Hexamethylenbis(3,5-di-tert.-butyl-4-hydroxy-hydrozlmtsäureamid), M = 637; und Triethylenglykolbis-(3-tert.-butyl-4-hydroxy-5-methylphenyl)propionat, M = 587, stammt.

4. Verwendung der Acryllack-Zusammensetzung nach einem der Ansprüche 1 bis 3, **dadurch gekennzeichnet, dass** das sterisch gehinderte Phenol der folgenden Formel (I) entspricht:

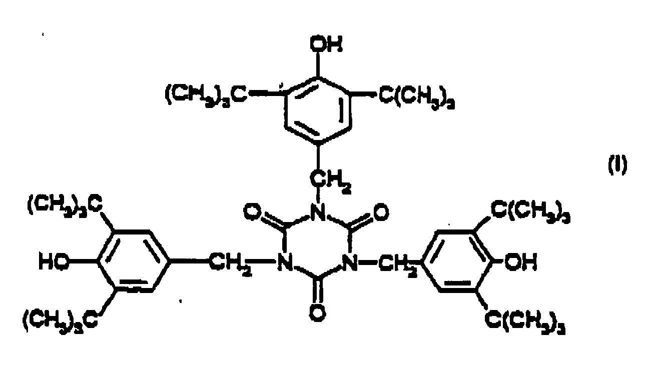

5. Verwendung der Acryllack-Zusammensetzung nach einem der Ansprüche 1 bis 4, **dadurch gekennzeichnet, dass** die Konzentration des sterisch gehinderten Phenols, bezogen auf den Feststoffgehalt der Zusammensetzung, zwischen 0,05 und 0,4 Gew.-% liegt.

6. Verwendung der Acryllack-Zusammensetzung nach einem der Ansprüche 1 bis 5, **dadurch gekennzeichnet, dass** die Acryllack-Zusammensetzung als wesentlichen acrylischen Bestandteil mindestens ein unter den ungesättigten Acrylderlvaten mit einer Urethan-, Polyester oder Acrylatstruktur ausgewähltes Acrylderivat enthält.

7. Verwendung der Acryllack-Zusammensetzung nach einem der Ansprüche 1 bis 6, **dadurch gekennzeichnet, dass** die Acryllack-Zusammensetzung außerdem auch noch mindestens einen UV-Absorber aus der Klasse der Triazine enthält, vorzugsweise ein Triazin mit einer der folgenden Strukturen: 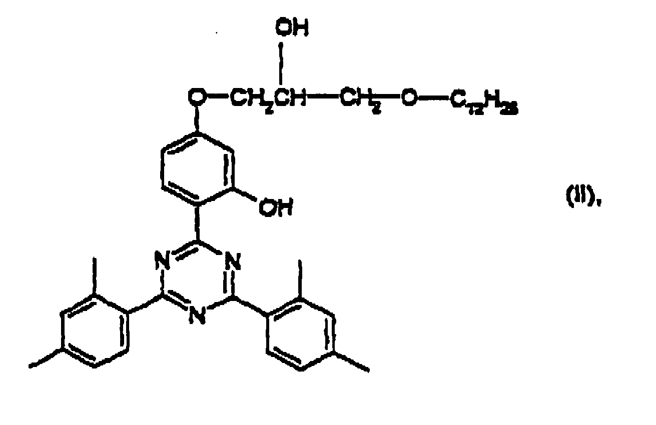 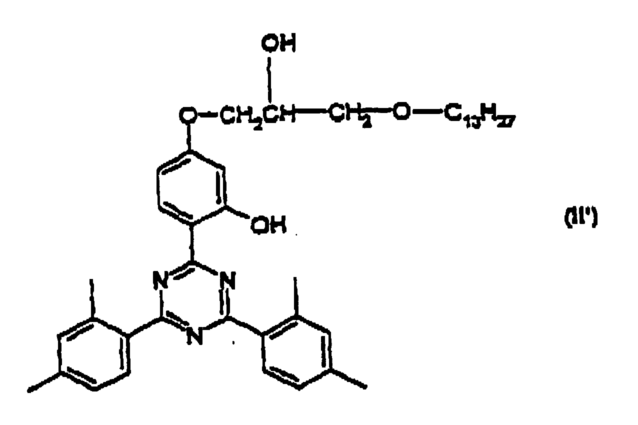 oder

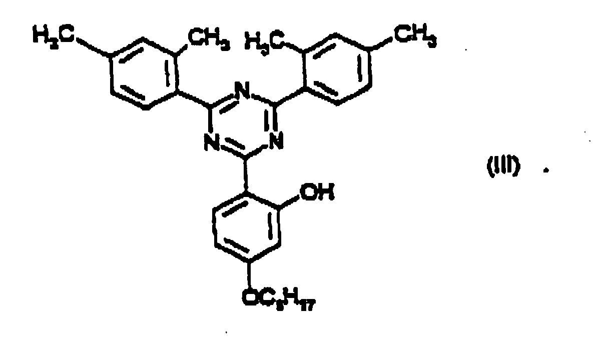

8. Verwendung der Acryllack-Zusammensetzung nach Anspruch 7, **dadurch gekennzeichnet, dass** die Trlazinkonzentration, bezogen auf den Feststoffgehalt der Zusammensetzung, zwischen 0,5 und 1 Gew.-% liegt.

9. Verwendung der Acryllack-Zusammensetzung nach einem der Ansprüche 1 bis 8, **dadurch gekennzeichnet, dass** die Acryllack-Zusammensetzung außerdem auch noch mindestens einen UV-Absorber aus der Klasse der Benzotriazole enthält.

10. Verwendung der Acryllack-Zusammensetzung nach Anspruch 9, **dadurch gekennzeichnet, dass** die Benzotriazolkonzentratlon, bezogen auf den Feststoffgehalt der Zusammensetzung, zwischen 0,2 und 0,5 Gew.-% liegt.

11. Verwendung der Acryllack-Zusammensetzung nach Anspruch 1 bis 10, **dadurch gekennzeichnet, dass** das Substrat ein Polycarbonat-Substrat oder ein PMMA-Substrat Ist.

12. Verwendung der Acryllack-Zusammensetzung nach Anspruch 1 bis 11, **dadurch gekennzeichnet, dass** der Acryllack eine Persoz-Härte gemäß NFT-Norm 300 16 von mehr als 300 Sekunden aufweist.

## Claims

1. Use of sterically hindered phenols as stabilizers for a photopolymerizable acrylic varnish composition for the purpose of preventing the loss of adhesion of the varnish to a substrate.

2. Use of the acrylic varnish composition according to Claim 1, **characterized in that** the sterically hindered phenol has a molecular mass of more than 300.

3. Use of the acrylic varnish composition according to Claim 1 or 2, **characterized in that** said sterically hindered phenol is from the group consisting of 2,6-di-tert-butyl-4-nonylphenol, M = 333; 2,2'-methylenebis(4-methyl-6-tert-butylphenol), M = 341; 4,4'-butylidenebis(2-tert-butyl-5-methylphenol), M = 383; 4,4'-thiobis(2-tert-butyl-5-methylphenol), M = 358; 2,2'-thiobis(2-tert-butyl-5-methylphenol), M = 358; octadecyl 3-(3',5'-di-t-butyl-4'-hydroxyphenyl)-propionate, M = 531, tetrakismethylene(3,5-di-t-butyl-4-hydroxyhydrocinnamate)methane, M = 1178; tris(3,5-dit-butyl-4-hydroxybenzyl)isocyanurate, M = 784; 2,2'-thiodiethylbis(3,5-di-tert-butyl-4-hydroxyphenyl)-propionate, M = 642; 1,1,3-tri(2'-methyl-4'-hydroxy-5'-tert-butylphenyl)butane, M = 545; 2,2'-methylenebis-6-(1-methylcyclohexyl)-para-cresol, M = 421; 2,2'-dimethyl-6-(1-methylcyclohexyl)phenol, M = 218; N,N'-hexamethylenebis(3,5-di-tert-butyl-4-hydroxyhydrocinnamamide), M = 637; and triethylene glycol bis(3-tert-butyl-4-hydroxy-5-methylphenyl)-propionate, M = 587.

4. Use of the acrylic varnish composition according to any of Claims 1 to 3, **characterized in that** the sterically hindered phenol corresponds to the following formula (I):

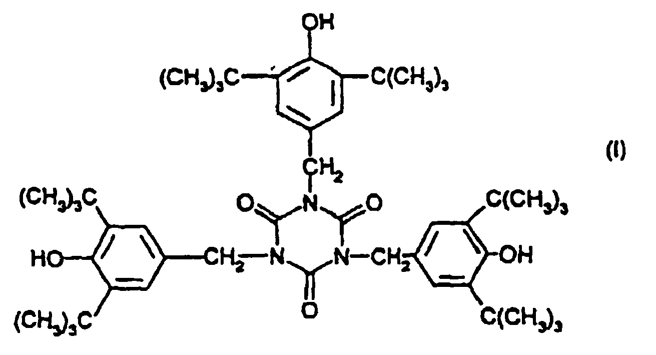

5. Use of the acrylic varnish composition according to any of Claims 1 to 4, **characterized in that** the concentration of the sterically hindered phenol, based on the solids content of the composition, is between 0.05 and 0.4% by weight.

6. Use of the acrylic varnish composition according to any of Claims 1 to 5**, characterized in that** the acrylic varnish composition comprises as substantial acrylic constituent at least one acrylic derivative selected from the unsaturated acrylic derivatives having a urethane, polyester or acrylate structure.

7. Use of the acrylic varnish composition according to any of Claims 1 to 6, **characterized in that** the acrylic varnish composition further comprises at least one UV absorber from the class of the triazines, preferably a triazine having one of the following structures: 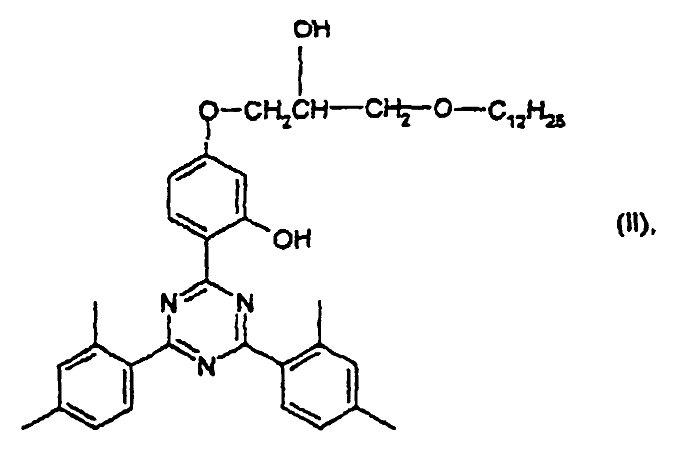 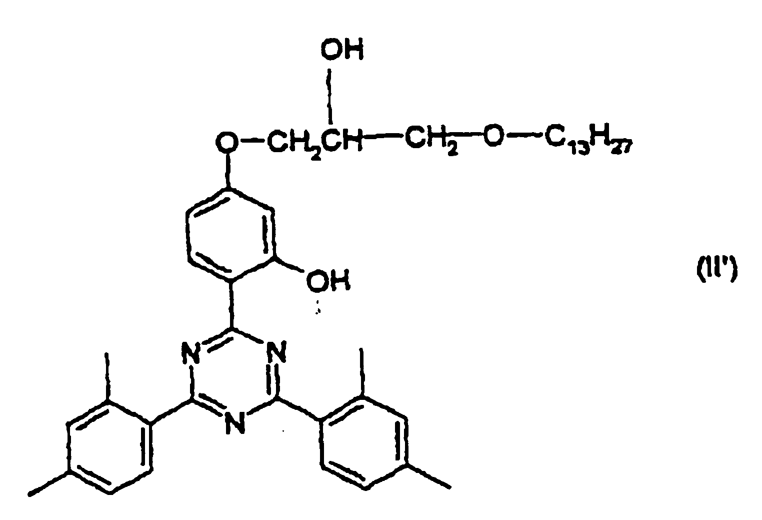 or

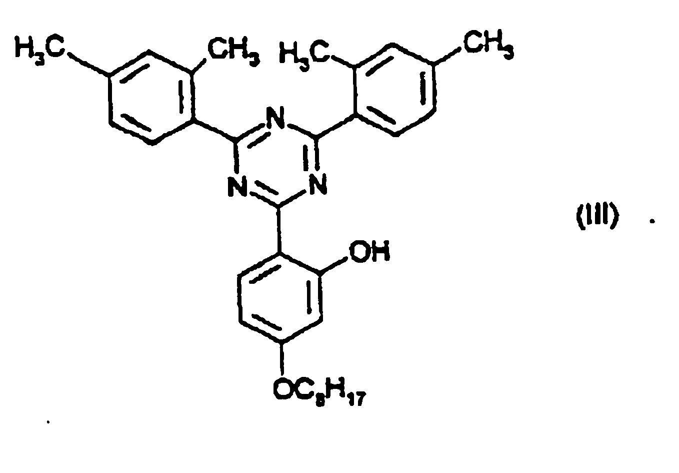

8. Use of the acrylic varnish composition according to Claim 7, **characterized in that** the triazine concentration, based on the solids content of the composition, is between 0.5 and 1% by weight.

9. Use of the acrylic varnish composition according to any of Claims 1 to 8, **characterized in that** the acrylic varnish composition further comprises at least one UV absorber from the class of the benzotriazoles.

10. Use of the acrylic varnish composition according to Claim 9, **characterized in that** the benzotriazole concentration, based on the solids content of the composition, is between 0.2 and 0.5% by weight.

11. Use of the acrylic varnish composition according to Claims 1 to 10, **characterized in that** the substrate is a polycarbonate substrate or a PMMA substrate.

12. Use of the acrylic varnish composition according to Claim 1 to 11, **characterized in that** the acrylic varnish has a Persoz hardness in accordance with NFT standard 300 16 of more than 300 seconds.

## Revendications

1. Utilisation de phénols stériquement encombrés comme stabilisateurs pour une composition de laque acrylique photopolymérisable pour éviter la perte de l'adhérence de la laque sur un substrat.

2. Utilisation de la composition de laque acrylique selon la revendication 1, **caractérisée en ce que** le phénol stériquement encombré présente une masse molaire supérieure à 300.

3. Utilisation de la composition de laque acrylique selon la revendication 1 ou 2, **caractérisée en ce que** le phénol stériquement encombré mentionné provient du groupe constitué par
- le 2,6-di-tert-butyl-4-nonylphénol, M = 333 ;
- le 2,2'-méthylènebis(4-méthyl-6-tert-butylphénol), M = 341 ;
- le 4,4'-butylidènebis(2-tert-butyl-5-méthylphénol), M = 383 ;
- le 4,4'-thiobis(2-tert-butyl-5-méthylphénol), M = 358 ;
- le 2,2'-thiobis(2-tert-butyl-5-méthylphénol), M = 358 ;
- le 3-(3',5'-di-t-butyl-4'-hydroxyphényl)propionate d'octadécyle, M = 531,
- le tétrakisméthylène(3,5-di-t-butyl-4-hydroxyhydrocinnamate)méthane, M 1178 ;
- le tris(3,5-di-t-butyl-4-hydroxybenzyl)isocyanurate, M = 784 ;
- le bis(3,5-di-tert-butyl-4-hydroxyphényl)propionate de 2,2'-thiodiéthyle, M = 642 ;
- le 1,1,3-tri(2'-méthyl-4'-hydroxy-5'-tert-butylphényl)butane, M = 545 ;
- le 2,2'-méthylènebis-6-(1-méthylcyclohexyl)-paracrésol, M 421 ;
- le 2,2'-diméthyl-6-(1-méthylcyclohexyl)phénol, M = 218 ;
- le N,N'-hexaméthylènebis(amide de l'acide 3,5-di-tert-butyl-4-hydroxyhydrocinnamique), M = 637 ; et
- le bis-(3-tert-butyl-4-hydroxy-5-méthylphényl)propionate de triéthylèneglycol, M = 587.

4. Utilisation de la composition de laque acrylique selon l'une quelconque des revendications 1 à 3, **caractérisée en ce que** le phénol stériquement encombré correspond à la formule suivante (I) :

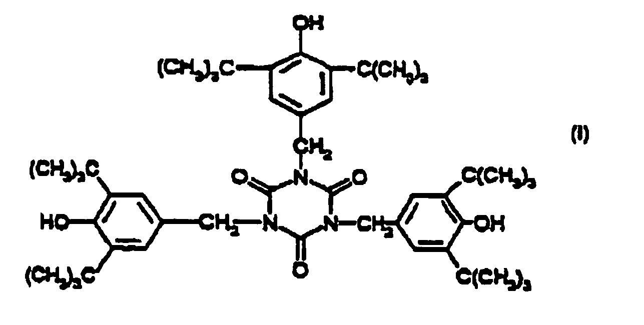

5. Utilisation de la composition de laque acrylique selon l'une quelconque des revendications 1 à 4, **caractérisée en ce que** la concentration en phénol stériquement encombré, par rapport à la teneur en solides de la composition, est située entre 0,05 et 0,4% en poids.

6. Utilisation de la composition de laque acrylique selon l'une quelconque des revendications 1 à 5, **caractérisée en ce que** la composition de laque acrylique contient, comme constituant acrylique essentiel, au moins un dérivé d'acryle choisi parmi les dérivés d'acryle insaturés présentant une structure d'uréthane, de polyester ou d'acrylate.

7. Utilisation de la composition de laque acrylique selon l'une quelconque des revendications 1 à 6, **caractérisée en ce que** la composition de laque acrylique contient en outre encore au moins un absorbant d'UV de la classe des triazines, de préférence une triazine présentant une des structures suivantes : 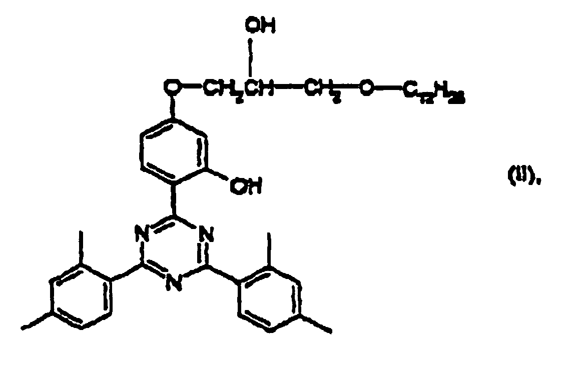 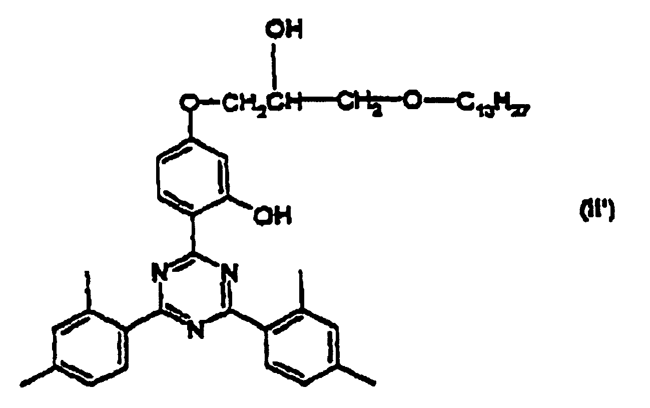 ou

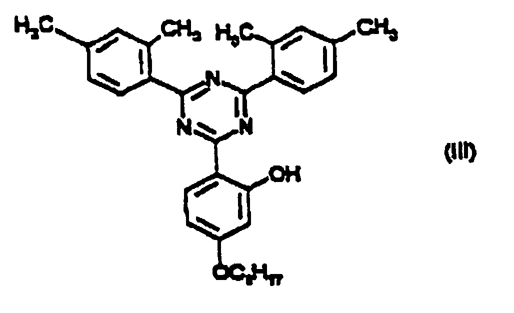

8. Utilisation de la composition de laque acrylique selon la revendication 7, **caractérisée en ce que** la concentration en triazine, par rapport à la teneur en solides de la composition, est située entre 0,5 et 1% en poids.

9. Utilisation de la composition de laque acrylique selon l'une quelconque des revendications 1 à 8, **caractérisée en ce que** la composition de laque acrylique contient en outre encore au moins un absorbant d'UV de la classe des benzotriazoles.

10. Utilisation de la composition de laque acrylique selon la revendication 9, **caractérisée en ce que** la concentration en benzotriazole, par rapport à la teneur en solides de la composition, est située entre 0,2 et 0,5% en poids.

11. Utilisation de la composition de laque acrylique selon les revendications 1 à 10 **caractérisée en ce que** le substrat est un substrat de polycarbonate ou un substrat de PMMA.

12. Utilisation de la composition de laque acrylique selon les revendications 1 à 11 **caractérisée en ce que** la laque acrylique présente une dureté Persoz selon la norme NFT 300 16 de plus de 300 secondes.
